# EUROPEAN PATENT APPLICATION

(11) **EP 4 836 259 A1**
(43) Date of publication of application: **04.11.2026**
(21) Application number: 24911123.8
(22) Date of filing: 24.12.2024
(51) Int. Cl.: H02K 11/30

(54) **MOTOR**

(30) Priority: 25.12.2023 CN 202311798547; 25.12.2023 CN 202323535190 U
(71) Applicant: Guangdong Zhaoqing L & V Co., Ltd., Zhaoqing, Guangdong 526238 (CN)
(72) Inventor: CHEN, Liang, Zhaoqing, Guangdong 526238 (CN); JIANG, Yuan, Zhaoqing, Guangdong 526238 (CN); ZHANG, Hongliang, Zhaoqing, Guangdong 526238 (CN); YANG, Lu, Zhaoqing, Guangdong 526238 (CN); LU, Peiwen, Zhaoqing, Guangdong 526238 (CN)
(74) Representative: Kraus & Lederer PartGmbB
(86) International application number: PCT/CN2024/141871
(87) International publication number: WO 2025/140198

(57) **Abstract**

The present invention relates to an electric motor, comprising a housing, and a stator assembly and a rotor assembly located in the housing, the stator assembly comprising a stator and a stator winding, the stator winding being electrically connected to a printed circuit board assembly at an axial end, the printed circuit board assembly being electrically connected to an electric motor connector located outside the housing and comprising a first and a second printed circuit board arranged spaced apart in an axial direction and electrically connected to each other, each of the first and the second printed circuit boards comprising a protruding portion extending into a receiving cavity of the electric motor connector. By using the electric motor according to the present invention, two printed circuit boards spaced apart in the axial direction are utilized and at the same time each printed circuit board has a protruding portion extending into the electric motor connector, so that even under the conditions that the outer diameter size of the electric motor is relatively small, the electric motor power is relatively large and the electric motor operating current is relatively large, the space arrangement requirements of various electronic devices can still be met, and at the same time, the wiring can also comply with motor vehicle industry standards.

## Description

### Technical Field

The present invention relates to the technical field of electric motors, and in particular relates to an electric motor comprising an improved printed circuit board assembly.

### Background Art

With the development of science and technology, in order to meet the needs of motor vehicle users as much as possible and improve the comfort of users, more and more functions are integrated in motor vehicles. To realize these functions, electric motors, in particular brushless electric motors, are widely used in the field of motor vehicles.

A brushless electric motor typically comprises a stator assembly and a rotor assembly, wherein the stator assembly comprises a stator and a stator winding wound on the stator, and the stator winding can be electrically connected to a printed circuit board assembly (PCBA) to realize torque output and signal transmission of the electric motor. In most existing brushless electric motor designs, three-phase winding control is mostly required. When driving with a built-in high-power circuit, not only six relatively large-volume MOSFET transistors are needed, but also a main control chip of relatively large size and external supporting circuits need to be arranged on a printed circuit board (PCB). Considering the space occupied by both, the printed circuit board is required to provide at least a layout area of approximately 16 mm × 16 mm. However, when such design requirements occur in an electric motor with a relatively small size (for example, an electric motor with an outer diameter less than 40 mm), relatively high electric motor power and relatively high electric motor operating current, especially when it is also required that PCB wiring complies with motor vehicle industry standards and a rotor shaft needs to pass through the middle of the PCB, it is very difficult for an electric motor structure design with a small size and having a single-layer PCB to achieve these functions.

In particular, in order to meet motor vehicle industry standards so that the EMC test of a brushless electric motor applied in a motor vehicle meets the requirements of CISPR25 Class 5, it is usually necessary to arrange one or even more relatively large-volume filter capacitors in the PCBA to meet filtering and EDS requirements, thus posing a greater demand on the wiring space that the PCBA can provide.

Therefore, it is necessary to propose a new electric motor structure, which enables a main control chip and an inverter circuit to be integrated inside the electric motor body even under the limitation of a small size of the electric motor, and at the same time allows the arrangement of large-capacity filter capacitors and filter circuit design, so as to realize required filtering functions.

### Summary of the Invention

The present invention is proposed based on such a background. Specifically, the present invention proposes an electric motor, comprising a housing, and a stator assembly and a rotor assembly located in the housing. The stator assembly comprises a stator and a stator winding wound on the stator, and the stator winding is electrically connected to a printed circuit board assembly at an axial end. The printed circuit board assembly is electrically connected to an electric motor connector located outside the housing and comprises a first printed circuit board and a second printed circuit board arranged spaced apart in an axial direction and electrically connected to each other. Each of the first printed circuit board and the second printed circuit board comprises a protruding portion extending into a receiving cavity of the electric motor connector.

According to an embodiment of the present invention, each of the first printed circuit board and the second printed circuit board further comprises a body portion located inside the housing and connected to the protruding portion, and the body portion is provided with a central through-hole for a rotor shaft of the rotor assembly to pass therethrough.

According to an embodiment of the present invention, the first printed circuit board carries a filter circuit; and the second printed circuit board carries a main control circuit and an inverter circuit of the electric motor.

According to an embodiment of the present invention, the electric motor connector comprises a connector body defining the receiving cavity, and three slots are provided in the receiving cavity, wherein one end of each of a positive pin, a negative pin and a signal pin is respectively press-fitted (for example, interference fit realized by an extrusion process) in a corresponding slot among the three slots.

According to an embodiment of the present invention, the other ends of the positive pin and the negative pin protruding from the corresponding slots are respectively inserted through corresponding receiving holes of the first printed circuit board and are fixedly connected to the first printed circuit board; and the other end of the signal pin protruding from the corresponding slot is inserted through corresponding receiving holes in the first printed circuit board and the second printed circuit board in sequence and is fixedly connected to the first printed circuit board and the second printed circuit board.

According to an embodiment of the present invention, a first pin and a second pin for conducting current filtered by the filter circuit are further fixed on the first printed circuit board, and the ends of the first pin and the second pin protruding from the first printed circuit board are respectively inserted through corresponding receiving holes of the second printed circuit board and are fixedly connected to the second printed circuit board.

According to an embodiment of the present invention, a fixing pin for providing a positioning and fixing function is further fixed on the first printed circuit board, and one end of the fixing pin protruding from the first printed circuit board is inserted through a corresponding receiving hole of the second printed circuit board and is fixedly connected to the second printed circuit board.

According to an embodiment of the present invention, fixing points of the first pin, the second pin, the fixing pin and the signal pin on each printed circuit board form an approximate triangle, so that the second printed circuit board can be stably maintained in a spaced-apart relationship relative to the first printed circuit board.

According to an embodiment of the present invention, the electric motor connector further comprises a connector cover, and the connector cover is snap-fitted to the connector body via a snap-fit structure, so as to encapsulate the protruding portions of the first printed circuit board and the second printed circuit board within the receiving cavity; and the body portions of the first printed circuit board and the second printed circuit board are encapsulated inside the housing by an end cover of the electric motor.

According to an embodiment of the present invention, a through-hole is provided on the first printed circuit board, a fixed portion of a grounding spring piece is received in the through-hole, and a flexible portion of the grounding spring piece located outside the through-hole abuts against the housing to realize grounding.

Compared with the prior art, especially in the design of small-sized electric motors, the use of the technical solution according to the present invention can achieve at least one of the following technical effects: by means of two PCBs, it allows both the main control chip and the inverter circuit to be integrated inside the housing of the electric motor, and at the same time, by making both PCBs extend out of the housing of the electric motor and into the receiving cavity of the electric motor connector to fully utilize the space of the electric motor connector, not only large current driving, selection of a large-sized main control unit, and reasonable motor vehicle-grade PCB wiring can be realized, but also arrangement of large-capacity filter capacitors and filter circuit designs suitable for high power can be allowed.

### Brief Description of the Drawings

The above and other features and advantages of the present invention will become more readily understood through the following description with reference to the accompanying drawings, wherein:
Fig. 1 shows a schematic structural view of an electric motor according to the present invention;
Figs. 2a and 2b respectively show a perspective view and a side view of the structure of a printed circuit board assembly installed in the electric motor shown in Fig. 1;
Figs. 3a and 3b respectively show schematic structural views of a first printed circuit board and a second printed circuit board constituting the printed circuit board assembly in Figs. 2a and 2b;
Fig. 4a shows a schematic perspective view of the printed circuit board assembly shown in Figs. 2a and 2b and an electric motor connector when assembled with each other;
Fig. 4b shows a partially exploded schematic view of the printed circuit board assembly shown in Figs. 2a and 2b and the electric motor connector when assembled with each other; and
Fig. 5 shows a schematic perspective view of a connector body of the electric motor connector, wherein a positive pin, a negative pin and a signal pin are fixedly arranged in a receiving cavity of the connector body.

All the drawings are merely schematic and are not necessarily drawn to scale, and moreover they only show those parts necessary for illustrating the present invention, while other parts are omitted or merely mentioned. That is, in addition to the components shown in the drawings, the present invention may further include other components.

### Detailed Description of Embodiments

In the following description, numerous specific details are set forth in order to enable those skilled in the art to more fully understand the present invention. However, it is obvious to those skilled in the art that the implementation of the present invention may not have some of these specific details. The following various aspects, features, embodiments and advantages are for illustrative purposes only and should not be regarded as elements or limitations of the claims, unless explicitly set forth in the claims. Terms such as "first", "second" and the like are used hereinafter to describe the elements of the present application, and these terms are merely used to distinguish the various elements and are not intended to limit the nature, sequence, order or number of these elements. Furthermore, it should be noted that in the present description, the same and/or functionally identical technical features are denoted by the same or similar reference numbers.

As mentioned in the background art, in existing electric motor designs, only a single printed circuit board located inside the electric motor housing is usually provided at an axial end of the stator winding, which typically has a shape (such as a circular shape) adapted to the cylindrical shape of the electric motor housing. However, in small-sized electric motors (e.g., the outer diameter of the electric motor is less than 40 mm), when the electric motor power and operating current are relatively large, copper pour on the printed circuit board is usually relatively wide, and a relatively large safety distance needs to be maintained between electronic components, which undoubtedly increases the difficulty of routing and arranging components in the small-sized electric motor. In addition, in order to integrate the main control chip and the inverter circuit inside the housing, and at the same time to allow the arrangement of large-capacity filter capacitors and filter circuit design suitable for high power (for example, to meet the EMC requirements of motor vehicle industry standards), the single printed circuit board design in the prior art obviously cannot meet the layout requirements of electronic components.

To this end, the present invention proposes an improved solution, which solves the problems of limited layout area for electronic components, difficult routing and the like by means of a structural design of a built-in high-power drive PCBA in a miniature small-sized electric motor.

In the electric motor structure design of the present invention, it is proposed to use two PCBs arranged spaced apart from each other in the axial direction of the electric motor to jointly complete the electric motor driving and filtering functions, and at the same time, by making both PCBs extend out of the housing of the electric motor and into the receiving cavity of the electric motor connector to fully utilize the space of the electric motor connector, routing and layout of electronic components in a small-sized space are realized.

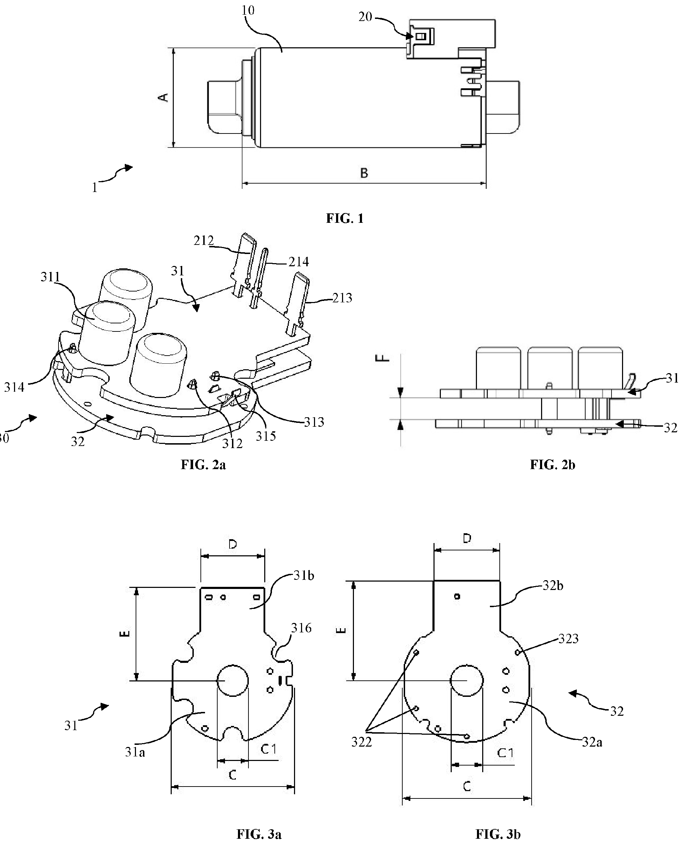

Specifically, Fig. 1 shows a schematic structural view of the electric motor according to the present invention. The present invention mainly relates to small-sized electric motors (especially brushless electric motors), for example, the outer diameter A of the electric motor is less than 40 mm, such as 20-38 mm, and the axial length B of the electric motor is 40-100 mm. Of course, this is not intended to limit the application of the present invention in electric motors of other sizes and models.

The electric motor 1 comprises a housing 10, a stator assembly and a rotor assembly located in the housing 10, and an electric motor connector 20 located outside the housing 10 and intended to be connected to a customer-side connector and thus to a power source. The stator assembly comprises a stator and a stator winding wound on the stator. The stator winding is electrically connected to a printed circuit board assembly (not shown in Fig. 1) at an axial end, and the printed circuit board assembly is electrically connected to the electric motor connector 20.

Figs. 2a and 2b respectively show a perspective view and a side view of the structure of an improved printed circuit board assembly 30 installed in the electric motor shown in Fig. 1.

Different from the single PCB design in the prior art, the printed circuit board assembly 30 according to the present invention comprises two printed circuit boards 31, 32 arranged spaced apart in the axial direction and electrically connected to each other, wherein one printed circuit board can be designed for a main control circuit and an inverter circuit of the electric motor, and the other printed circuit board can be designed for filter circuit design related to CISPR 25 Class 5 rating requirements. The distance F (see Fig. 2b) between the two printed circuit boards is preferably 3-10 mm. Of course, this distance value can be adaptively selected and adjusted according to the actual requirements of the electric motor design.

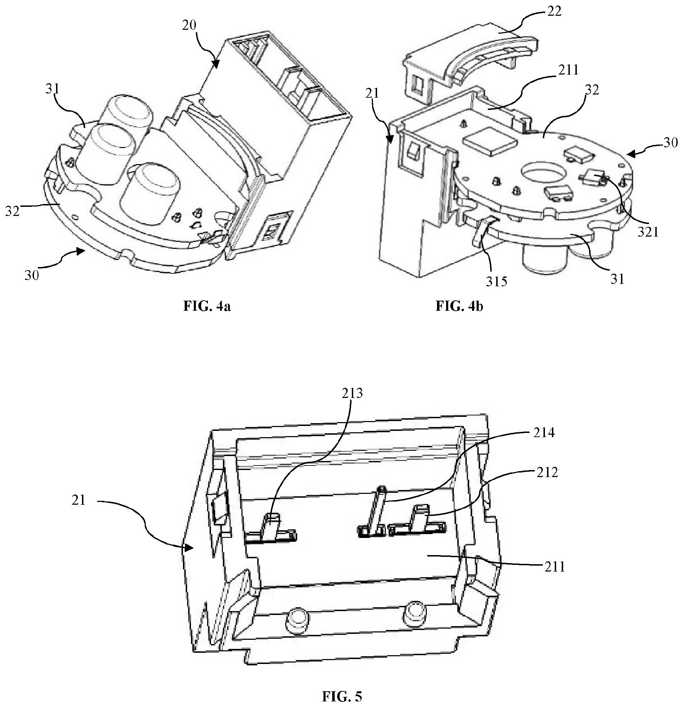

Continuing to refer to Figs. 3a and 3b, they respectively show schematic structural views of the two printed circuit boards constituting the printed circuit board assembly 30 in Figs. 2a and 2b. Fig. 3a shows a first printed circuit board 31 carrying a filter circuit. As shown in Fig. 2a, the filter circuit is provided with three large-capacity filter capacitors 311. Of course, other numbers and sizes of filter capacitors can also be selected according to the power level. Fig. 3b shows a second printed circuit board 32 carrying a main control circuit and an inverter circuit of the electric motor, for example, the main control chip and six MOSFET transistors are carried on the surface of the second printed circuit board 32 facing the first printed circuit board 31, while three Hall sensors 321 (see Fig. 4b) are carried on the opposite surface, and these Hall sensors 321 can be used to detect the rotational position accuracy and the like of the rotor shaft.

As can be seen from Figs. 3a and 3b, the first and second printed circuit boards have substantially the same outer contour. Each printed circuit board comprises a body portion 31a, 32a and a protruding portion 31b, 32b extending from the body portion, wherein the body portion is located inside the housing 10 of the electric motor, while the protruding portion extends out of the housing of the electric motor and is received into the receiving cavity of the electric motor connector 20, so that the space of the electric motor connector 20 can be fully utilized, thereby freeing up more space for the body portion for the arrangement of a large-sized main control unit and the filter circuit, while also meeting the corresponding motor vehicle-grade wiring requirements.

As shown in Figs. 3a and 3b, in order to adapt to the cylindrical shape of the electric motor housing, the body portion preferably adopts a substantially circular shape, and its outer diameter C is preferably 18-36 mm. For example, when the outer diameter of the electric motor is 36 mm, the outer diameter C of the printed circuit board is about 33.8 mm. In addition, the body portion is provided with a central through-hole for the rotor shaft of the rotor assembly to pass therethrough, and the inner diameter C1 of the central through-hole is within 12 mm. Moreover, the protruding portion connected to the body portion is designed to have a substantially rectangular shape, and its width D is 10-28 mm. Especially when the width D is 17 mm, it can basically meet the design requirements of a large-sized 7 mm × 7 mm main control unit and the dimension space requirements of the external circuit. In addition, the height E from the outermost edge of the protruding portion to the center of the central through-hole can be selected as 16-30 mm. Of course, all the above dimensions can be adjusted and selected according to the actual electric motor structure.

Figs. 4a and 4b respectively show schematic perspective views of the printed circuit board assembly 30 shown in Figs. 2a and 2b and the electric motor connector 20 when assembled with each other. The electric motor connector 20 is located outside the housing 10. With particular reference to Fig. 4b, the electric motor connector 20 comprises a connector body 21 defining a receiving cavity 211. It can be seen that the protruding portions of the two printed circuit boards are both inserted into the receiving cavity 211 of the electric motor connector 20. The electric motor connector 20 further comprises a connector cover 22, and the connector cover 22 is snap-fitted to the connector body 21 via a snap-fit structure (see Fig. 4a), so as to encapsulate the protruding portions of the first printed circuit board 31 and the second printed circuit board 32 within the receiving cavity 211. In addition, the body portions of the first printed circuit board 31 and the second printed circuit board 32 are encapsulated inside the housing 10 of the electric motor by an end cover of the electric motor.

With particular reference to Fig. 5, it shows a schematic perspective view of the connector body 21 of the electric motor connector 20. A positive pin 212, a negative pin 213 and a Lin or CAN signal pin 214 are fixedly arranged in the receiving cavity 211 of the connector body 21. These pins can be formed into a single part together with the electric motor connector 20 by an overmolding process, and then soldered to the two printed circuit boards. Alternatively, the pins may be press-fitted into slots reserved on the electric motor connector, and then soldered to the two printed circuit boards to form an integral whole.

Specifically, in the process of assembling the electric motor connector 20 and the printed circuit board assembly 30, one end (the end intended to mate with the customer-side connector) of the positive pin 212 and one end of the negative pin 213 can first be press-fitted into corresponding slots of the electric motor connector 20, and the other ends protruding from the corresponding slots are inserted through corresponding receiving holes of the first printed circuit board 31 carrying the filter circuit and fixedly connected to the first printed circuit board 31, for example, by soldering. One end (the end intended to mate with the customer-side connector) of the Lin or CAN signal pin 214 is press-fitted into a corresponding slot of the electric motor connector 20, and the other end protruding from the corresponding slot is inserted through corresponding receiving holes in the first printed circuit board 31 and the second printed circuit board 32 carrying the main control circuit and the like in sequence and is fixedly connected to the first printed circuit board 31 and the second printed circuit board 32, for example, by soldering. Finally, the assembly as shown in Figs. 4a and 4b is formed.

With combined reference to Fig. 2a and Fig. 4b, a first pin 312 and a second pin 313 for conducting the current filtered by the filter circuit are further fixed on the first printed circuit board 31, and the ends of the first pin 312 and the second pin 313 protruding from the first printed circuit board 31 are respectively inserted through corresponding receiving holes of the second printed circuit board 32 and are fixedly connected to the second printed circuit board 32. In addition, a fixing pin 314 for providing a positioning and fixing function is further fixed on the first printed circuit board 31, and an end of the fixing pin 314 protruding from the first printed circuit board 31 is inserted through a corresponding receiving hole of the second printed circuit board 32 and is fixedly connected to the second printed circuit board 32.

It should be understood that the above-mentioned fixed connection can be carried out in a suitable manner known in the prior art, for example, by soldering, and of course, other possible connection manners besides soldering can also be used, such as a manner in which the pins are press-fitted with metallized receiving holes.

In order to more conveniently show the relative positional relationship between the respective pins fixed on the first printed circuit board 31 and the respective pins fixed in the electric motor connector 20, the positive pin 212, the negative pin 213 and the signal pin 214 fixed in the receiving cavity 211 of the electric motor connector 20 are specifically shown in Fig. 2a. As shown in Fig. 2a, the fixing points of the first pin 312 and the second pin 313, the fixing point of the fixing pin 314 and the fixing point of the signal pin 214 on each printed circuit board form an approximate triangle (wherein since the first and second pins are arranged adjacent to each other, their fixing points can be regarded as one vertex of the triangle), so that the second printed circuit board 32 can be stably maintained in a spaced-apart relationship relative to the first printed circuit board 31.

Furthermore, a through-hole is further provided on the first printed circuit board 31. A fixed portion of a grounding spring piece 315 is received in the through-hole, and a flexible portion of the grounding spring piece 315 located outside the through-hole abuts against the housing 10 of the electric motor to realize effective grounding.

When the printed circuit board assembly discussed above is installed in the housing of the electric motor, the printed circuit board assembly can be electrically connected with the stator winding, such as three-phase winding, via a connecting structure, for example, by electrically connecting the coil of each phase winding to the printed circuit board assembly, so as to realize torque output and signal transmission. Specifically, as an example, as shown in Fig. 3b, the second printed circuit board 32 carrying the main control circuit is provided with three through-holes 322 spaced apart from each other in the circumferential direction by 60 degrees, and these three through-holes 322 can be in the form of tinned holes, which are intended to be press-fitted with corresponding three-phase winding contact portions on the connecting structure, for example, in the form of eye-of-the-needle pins, so as to realize electrical connection. In addition, another separate tinned through-hole 323 is provided on the second printed circuit board 32, which is intended to be press-fitted with a common terminal contact portion, for example, in the form of an eye-of-the-needle pin. When realizing the press-fit connection between the printed circuit board assembly and the contact portions of the connecting structure of the stator winding, preferably, four radial notches 316 are provided on the first printed circuit board 31, so that a pressing tool can be allowed to pass through the radial notches and abut against the second printed circuit board 32, thereby pressing it towards the contact portions to be connected thereto, and finally completing the electrical connection between the printed circuit board assembly and the stator winding.

By using the electric motor according to the present invention, two printed circuit boards are utilized and at the same time each printed circuit board has a protruding portion extending into the electric motor connector, so that even under the conditions that the outer diameter size of the electric motor is relatively small, the electric motor power is relatively large, and the electric motor operating current is relatively large, the space arrangement requirements of various electronic devices can still be met, and at the same time, the wiring can also comply with motor vehicle industry standards.

For those skilled in the art, various modifications and variations can be made to the embodiments disclosed above without departing from the scope or spirit of the present invention. According to the practice of the present invention disclosed in the present description, other embodiments of the present invention will be obvious to those skilled in the art. The present description and the disclosed examples should be considered as illustrative only, and the true scope of the present invention is specified by the appended claims and their equivalents.

## Claims

1. An electric motor, comprising a housing, and a stator assembly and a rotor assembly located in the housing, the stator assembly comprising a stator and a stator winding wound on the stator, the stator winding being electrically connected to a printed circuit board assembly at an axial end, **characterized in that** the printed circuit board assembly is electrically connected to an electric motor connector located outside the housing, and comprises a first printed circuit board and a second printed circuit board arranged spaced apart in an axial direction and electrically connected to each other, each of the first printed circuit board and the second printed circuit board comprising a protruding portion extending into a receiving cavity of the electric motor connector.

2. The electric motor according to claim 1, **characterized in that** each of the first printed circuit board and the second printed circuit board further comprises a body portion located inside the housing and connected to the protruding portion, the body portion being provided with a central through-hole for a rotor shaft of the rotor assembly to pass therethrough.

3. The electric motor according to claim 2, **characterized in that** the first printed circuit board carries a filter circuit; and the second printed circuit board carries a main control circuit and an inverter circuit of the electric motor.

4. The electric motor according to claim 3, **characterized in that** the electric motor connector comprises a connector body defining the receiving cavity, and three slots are provided in the receiving cavity, wherein one end of each of a positive pin, a negative pin and a signal pin is respectively press-fitted in a corresponding slot among the three slots.

5. The electric motor according to claim 4, **characterized in that** the other ends of the positive pin and the negative pin protruding from the corresponding slots are respectively inserted through corresponding receiving holes of the first printed circuit board and are fixedly connected to the first printed circuit board; and the other end of the signal pin protruding from the corresponding slot is inserted through corresponding receiving holes in the first printed circuit board and the second printed circuit board in sequence and is fixedly connected to the first printed circuit board and the second printed circuit board.

6. The electric motor according to claim 5, **characterized in that** a first pin and a second pin for conducting current filtered by the filter circuit are further fixed on the first printed circuit board, and the ends of the first pin and the second pin protruding from the first printed circuit board are respectively inserted through corresponding receiving holes of the second printed circuit board and are fixedly connected to the second printed circuit board.

7. The electric motor according to claim 6, **characterized in that** a fixing pin for providing a positioning and fixing function is further fixed on the first printed circuit board, and one end of the fixing pin protruding from the first printed circuit board is inserted through a corresponding receiving hole of the second printed circuit board and is fixedly connected to the second printed circuit board.

8. The electric motor according to claim 7, **characterized in that** fixing points of the first pin, the second pin, the fixing pin and the signal pin on each printed circuit board form an approximate triangle, so that the second printed circuit board can be stably maintained in a spaced-apart relationship relative to the first printed circuit board.

9. The electric motor according to any one of claims 4 to 8, **characterized in that** the electric motor connector further comprises a connector cover, and the connector cover is snap-fitted to the connector body via a snap-fit structure, so as to encapsulate the protruding portions of the first printed circuit board and the second printed circuit board within the receiving cavity; and the body portions of the first printed circuit board and the second printed circuit board are encapsulated inside the housing by an end cover of the electric motor.

10. The electric motor according to any one of claims 1 to 8, **characterized in that** a through-hole is provided on the first printed circuit board, a fixed portion of a grounding spring piece is received in the through-hole, and a flexible portion of the grounding spring piece located outside the through-hole abuts against the housing to realize grounding.
